# EUROPEAN PATENT SPECIFICATION

(11) **EP 3 608 296 B1**
(45) Date of publication and mention of the grant of the patent: **05.03.2025**
(21) Application number: 18774435.4
(22) Date of filing: 14.03.2018
(51) Int. Cl.: C03B 37/014

(54) **MANUFACTURING DEVICE AND MANUFACTURING METHOD FOR OPTICAL FIBER POROUS PREFORM**
HERSTELLUNGSVORRICHTUNG UND HERSTELLUNGSVERFAHREN FÜR PORÖSE GLASFASERVORFORM
DISPOSITIF ET PROCÉDÉ DE FABRICATION D'UNE PRÉFORME POREUSE DE FIBRE OPTIQUE

(30) Priority: 30.03.2017 JP 2017068857
(43) Date of publication of application: 12.02.2020
(73) Proprietor: Furukawa Electric Co., Ltd., Chiyoda-ku Tokyo 100-8322 (JP)
(72) Inventor: HIGASHIZAWA, Tatsuyuki, Tokyo 100-8322 (JP); SHINADA, Seiichi, Tokyo 100-8322 (JP); NAKAJIMA, Masaki, Tokyo 100-8322 (JP)
(74) Representative: SSM Sandmair
(86) International application number: PCT/JP2018/009968
(87) International publication number: WO 2018/180495

(56) References cited:
- WO-A2-2007/054961
- JP-A- 2004 269 284
- JP-A- 2006 264 995
- JP-A- 2010 042 940
- JP-A- S60 137 839
- JP-A- S60 137 839
- US-A1- 2002 162 363

## Description

### Field

The present invention relates to a manufacturing apparatus and a manufacturing method for an optical fiber porous preform having an auxiliary burner.

### Background

In general, a quartz glass-based optical fiber is manufactured by drawing an optical fiber preform made of quartz glass. The optical fiber preform is manufactured by, after forming a porous layer by depositing glass particulates on the outer circumference of a target (starting material), vitrifying the porous layer by dehydrating and sintering. Here, the porous layer is formed by an outside vapor deposition (OVD) apparatus or the like.

In the OVD apparatus, a flammable gas, a combustion supporting gas, and a glass material are introduced into a glass-particulate synthesizing burner provided in a reaction chamber, and glass particulates generated by flame hydrolysis reaction are deposited in the radial direction of a rotating target. As a result, a porous layer is formed on the outer circumference of the target, and an optical fiber porous preform (hereinafter also referred to as a porous preform) to be a base of an optical fiber preform is manufactured. When manufacturing this porous preform, it has been known to use, in addition to the glass-particulate synthesizing burner, auxiliary burners that perform heating for sintering both end portions of the porous preform (see Patent Literature 1). Sintering the end portions of the porous preform by using the auxiliary burners makes it possible to suppress cracking (crack) of the deposited porous layer and peeling from the target.

### Citation List

### Patent Literature

Patent Literature 1: Japanese Patent Application Laid-open No. 2003-165738

WO2007054961A2 discloses a method for producing an optical fiber preform having a large size soot porous body (cf. abstract) and that this method comprises the following steps: a) mounting a rod on the chucks of a movable lathe provided with means to rotate the rod onto its own longitudinal axis, means to traverse the rod along its own longitudinal axis, one or more soot forming burners provided with means to traverse the burner along the longitudinal axis of said rod and supply means to supply reactant gases, and one or more heating means provided towards opposite ends of said rod, wherein the heating means are provided with means to supply oxygen and fuel gases, which in-turn are provided with means to control the flow rate of oxygen and fuel gases and/or means to control the amount of oxygen and fuel gases; b) rotating said rod onto its own longitudinal axis by said means to rotate and traversing said rod along its own longitudinal axis by said means to traverse; and c) directing glass forming soot materials from the soot forming burner to get deposited on the surface of said rod till desired amount of soot particles is deposited on said rod to have soot porous body of desired diameter which is transferred to a sintering furnace wherein the optical fiber preform (cf. abstract).

JP S60 137839 A discloses a burner for forming fine powder of optical glass (cf. claim 1) and that in the burner wherein the fine powder of optical glass prepared by the chemical reaction of vapor-phase raw material through oxyhydrogen flame is piled on the powder deposit position in the reactor equipped with the exhaust vent, the hood to regulate the extent of flame is set at the outer periphery of the tip of the burner, and the protection member to protect flame from air flow in the reactor is laid at the outside of the hood (cf. abstract).

JP2006264995A discloses a device of producing a preform for optical fibers (cf. abstract) and that a plurality of the clad burners have cylindrical burner hoods at their tips, and a part or the whole of the clad burners is provided with a glass particulate sticking prevention part at the tip of each burner hood (cf. abstract).

JP 2010 042940 A discloses that an apparatus for producing the glass parent material is equipped with a blocking plate which detours the air current supplied from the air supply port to avoid direct contact with the target and leads the current to the air exit (cf. abstract).

### Summary

### Technical Problem

However, in a vitrification process after manufacturing the porous preform, cracks may occur in the porous preform to be vitrified. The inventor has diligently studied the causes of cracks and found that one of the causes is that the flames of the auxiliary burner are fanned by supply air wind in the reaction chamber of the OVD apparatus when manufacturing the porous preform. The supply air wind is an airflow that is flowed in the reaction chamber so as to discharge surplus glass particulates that have not deposited on the target while being generated in the reaction chamber to the outside of the reaction chamber. When the flames of the auxiliary burner are fanned by this airflow, the end portion of the porous preform is unevenly heated, which may cause insufficient sintering. If the sintering of the porous preform is insufficient, in the subsequent vitrification process, the porous preform may be unable to withstand the stress generated when the porous preform shrinks, and cracks may occur.

The present invention has been made in view of the foregoing, and an objective of the present invention is to provide a manufacturing apparatus and a manufacturing method for an optical fiber porous preform that are capable of sufficiently sintering an end portion of the optical fiber porous preform while suppressing the flames of an auxiliary burner from being fanned and are capable of suppressing the occurrence of cracks in the optical fiber porous preform in a subsequent vitrification process. Solution to Problem

In order to solve the above disadvantage and to achieve the objective, the present invention provides a manufacturing apparatus for an optical fiber porous preform according to claim 1 and a manufacturing method for an optical fiber porous preform according to claim 3 . Further embodiments of the present invention are described in the dependent claims.

### Advantageous Effects of Invention

With the manufacturing apparatus and the manufacturing method for an optical fiber porous preform of the present invention, the airflow guiding unit provided in the circumference of the auxiliary burner can suppress the flames of the auxiliary burner from being greatly fanned, so that it is possible to sufficiently sinter the end portion of the optical fiber porous preform and to suppress the occurrence of cracks in the optical fiber porous preform in the vitrification process that is a post-process.

### Brief Description of Drawings

FIG. 1 is a schematic diagram illustrating a principal portion of an OVD apparatus according to one embodiment of the present invention.
FIG. 2 is an enlarged view enlarging an enclosed portion A in FIG. 1.
FIG. 3 is a side view of a wind guard in the embodiment of the present invention.
FIG. 4 is a top view of the wind guard in the embodiment of the present invention.
FIG. 5 is a side view illustrating a wind guard according to a first modification of the present invention.
FIG. 6 is a side view illustrating a wind guard according to a second modification of the present invention.
FIG. 7 is a side view illustrating a wind guard according to a third modification of the present invention.
FIG. 8 is a top view illustrating a wind guard according to a fourth modification of the present invention.
FIG. 9 is a top view illustrating a wind guard according to a fifth modification of the present invention.
FIG. 10 is a top view illustrating a wind guard according to a sixth modification of the present invention.
FIG. 11 is a top view illustrating a wind guard according to a seventh modification of the present invention.

### Description of Embodiment

The following describes an exemplary embodiment of the present invention with reference to the accompanying drawings. The invention, however, is not intended to be limited by the following embodiment. In each of the drawings, identical or corresponding constituent elements are denoted by identical reference signs as appropriate, and redundant explanations are omitted as appropriate. Furthermore, it needs to note that the drawings are schematic and that the relation of dimensions of respective elements and the like may be different from reality. Between the drawings also, portions that the relation of dimensions and the ratios are different from one another may be included.

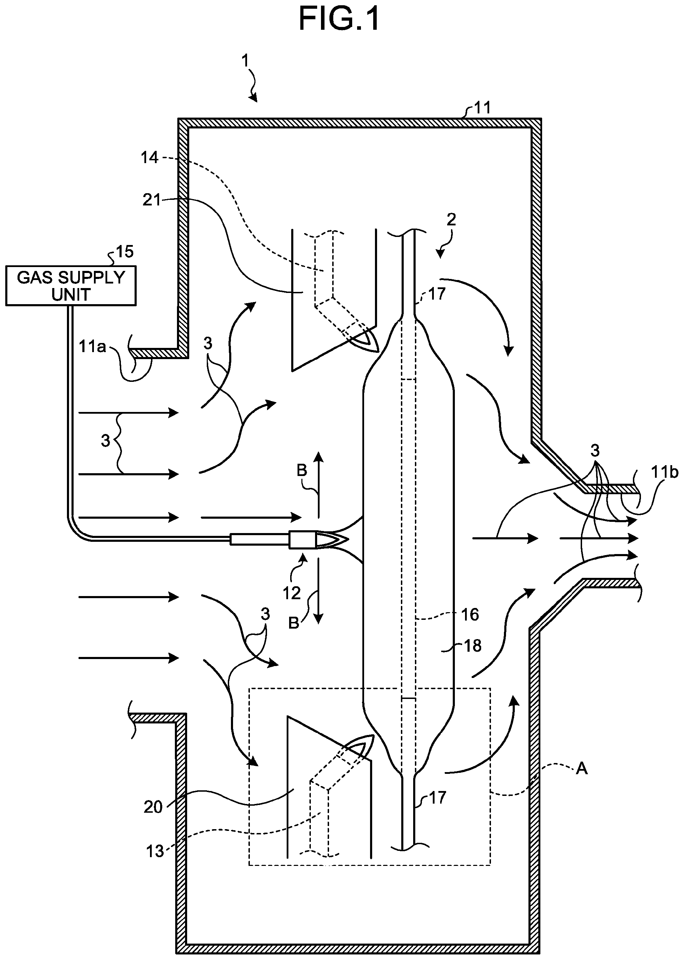

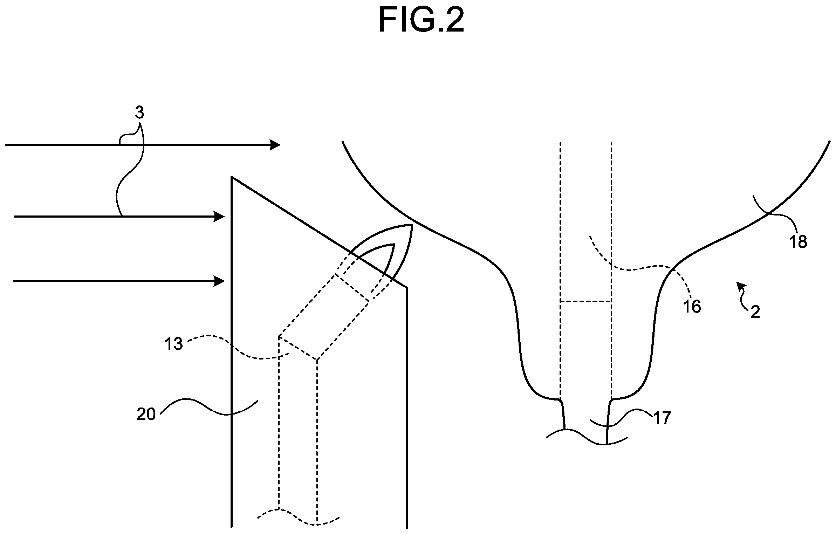

First, a manufacturing apparatus and a manufacturing method for an optical fiber porous preform according to one embodiment of the present invention will be described. FIG. 1 illustrates an outside vapor deposition (OVD) apparatus, which is a manufacturing apparatus for an optical fiber porous preform according to this embodiment. FIG. 2 is an enlarged view of an enclosed portion A in FIG. 1.

As illustrated in FIG. 1, an OVD apparatus 1 includes a reaction chamber 11, a glass-particulate synthesizing burner 12, an auxiliary burner 13 on which a wind guard 20 is arranged, an auxiliary burner 14 on which a wind guard 21 is arranged, and a gas supply unit 15.

The reaction chamber 11 is configured to be able to carry in and accommodate a target 16 and dummy rods 17. In the reaction chamber 11, provided are an air inlet 11a for introducing clean air from the outside or a predetermined air supply unit (not depicted), and an exhaust duct 11b for discharging gas in the reaction chamber 11. As the clean air is introduced into the reaction chamber 11 via the air inlet 11a and discharged from the exhaust duct 11b, airflow 3 going toward the exhaust duct 11b from the air inlet 11a is generated in the reaction chamber 11. By the airflow 3, the surplus glass particulates floating in the reaction chamber 11 during the manufacturing of a porous preform 2 can be discharged from the exhaust duct 11b.

The glass-particulate synthesizing burner 12, which is a main burner, is made up of at least a single concentric multi-tube burner for depositing glass particulates on the target 16 as a starting material, or for performing sintering. In the glass-particulate synthesizing burner 12, simultaneously introduced from the gas supply unit 15 are a main raw material gas such as silicon tetrachloride (SiCl₄), hydrogen (H₂) gas, which is a flammable gas, oxygen (O₂) gas, which is a combustion supporting gas, argon (Ar) gas as a blanketing gas, or the like, for example. The dummy rods 17 are portions that are connected to both ends of the target 16 and are grasped by grasping units (not depicted) for driving to rotate and driving to elevate the target 16. In the deposition of the glass particulates, a gas composed of vaporized SiCl₄ gas, H₂ gas, and O₂ gas is supplied while being ignited and burned in the glass-particulate synthesizing burner 12. The SiCl₄ that is subjected to hydrolysis reaction in the flames is turned into silica particulates and deposited around the target 16. Along with this, while the target 16 is being rotated, the glass-particulate synthesizing burner 12 is made to repeatedly reciprocate along the longitudinal direction of the target 16 (arrows B in FIG. 1). As a result, the glass particulates are uniformly deposited on the outer circumference of the target 16, and a porous layer 18 in the porous preform 2 is formed. The target 16 is made up of a portion to be a core when made into an optical fiber, and a portion to be a cladding formed therearound. The porous layer 18 turns into a cladding portion that is integrated with a portion to be the cladding of the target 16 when made into an optical fiber later.

As illustrated in FIG. 2, each of the auxiliary burners 13 and 14 is provided in the vicinity of the end portion along the longitudinal direction of the target 16. The positions of the auxiliary burners 13 and 14 are immovable with respect to the end portions of the target 16. This configuration enables the auxiliary burners 13 and 14 to be able to heat both end portions of the porous preform 2 to be manufactured. In the auxiliary burners 13 and 14, from a predetermined combustion gas supply unit (not depicted), a flammable gas such as H₂ gas and a combustion supporting gas such as O₂ gas are introduced, for example. The flammable gas and the combustion supporting gas are ignited and burned in the auxiliary burners 13 and 14, and the end portions of the target 16 are heated.

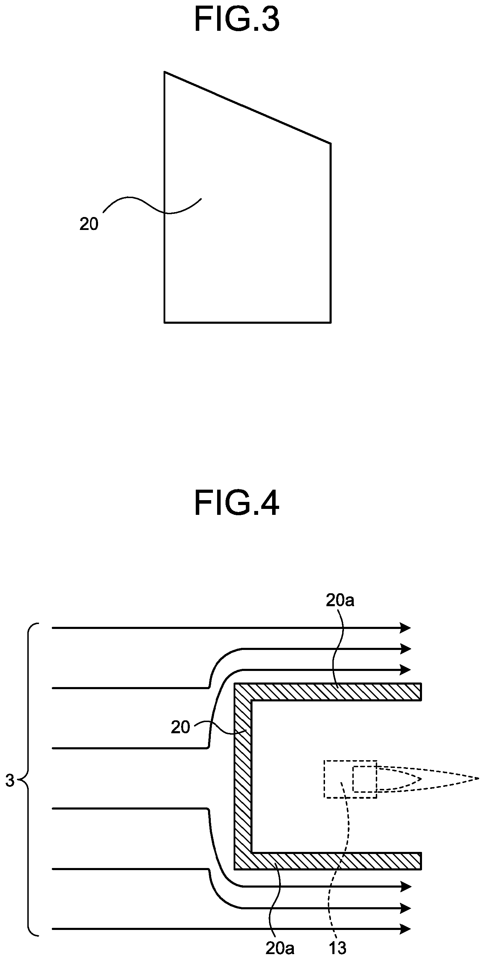

FIG. 3 and FIG. 4 are respectively a side view and a top view of the wind guards 20 and 21 in this embodiment. As illustrated in FIG. 2, FIG. 3, and FIG. 4, the wind guards 20 and 21 serving as an airflow guiding unit in this embodiment are respectively provided in the vicinity of the auxiliary burners 13 and 14. In the wind guards 20 and 21, at least an emission side of the flames is open that the auxiliary burners 13 and 14 emit. Furthermore, each of the wind guards 20 and 21 has a shape covering, with respect to the auxiliary burners 13 and 14, the side opposite to the emission side of the flames, and lateral sides as viewed from the emission side. Specifically, in this embodiment, the shape of the wind guards 20 and 21 in a lateral view (see FIG. 3) seen from the plane in FIG. 2 (hereinafter referred to as a lateral surface shape) is in a trapezoidal shape having a tapered portion corresponding to the shape of the end portion of the porous preform 2. Furthermore, the shape of the wind guards 20 and 21 in FIG. 2 in top view (see FIG. 4) seen from the upper portion (hereinafter referred to as an upper surface shape) is in a U-shape that covers and guards the lateral sides of the auxiliary burners 13 and 14. The wind guards 20 and 21 are made of titanium (Ti) or a Ti alloy, for example. Ti and Ti alloys are preferable, from the viewpoint of being excellent in corrosion resistance and durability, as the material of the wind guards 20 and 21 that are arranged in the vicinity of the auxiliary burners 13 and 14. For the material of the wind guards 20 and 21, it is also possible to employ materials such as quartz glass, which is excellent in corrosion resistance and heat resistance and is easy to process.

As illustrated in FIG. 2, with respect to the auxiliary burner 13, the wind guard 20 is located on the upstream side of the airflow 3 generated in the reaction chamber 11 and, on the downstream side of the airflow, the open portion of the wind guard 20 is located. As a result, it is configured such that the airflow 3 does not directly blow against the auxiliary burner 13. Furthermore, as illustrated in FIG. 4, as the airflow 3 is guided by lateral surfaces 20a of the wind guard 20 on the lateral sides of the auxiliary burner 13, the airflow 3 can be restrained from going around toward the open portion of the wind guard 20. This configuration prevents the airflow 3 from going toward the flames of the auxiliary burner 13. Accordingly, the flames of the auxiliary burner 13 can be restrained from being fanned greatly by the airflow 3, and the flames can be stabilized. Thus, it is possible to perform heating of the end portions of the porous preform 2 stably and to perform sintering sufficiently. In addition, because the gas flow rate of the glass-particulate synthesizing burner 12 is larger as compared with the auxiliary burners 13 and 14, the possibility of being fanned greatly by the airflow 3 is low.

Next, first to seventh modifications of the wind guard in the embodiment of the present invention will be described.

### (First Modification)

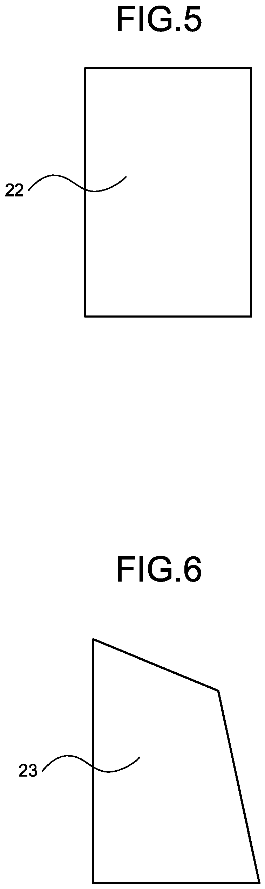

FIG. 5 is a side view illustrating a wind guard 22 according to a first modification of the present invention. As illustrated in FIG. 5, the lateral surface shape of the wind guard 22 in the first modification is in a rectangular shape, for example.

### (Second Modification)

FIG. 6 is a side view illustrating a wind guard 23 according to a second modification of the present invention. As illustrated in FIG. 6, the lateral surface shape of the wind guard 23 in the second modification is a tetragon for which the upper portion has a tapered shape corresponding to the shape of the end portion of the porous preform 2 and the side on the porous preform 2 side of the wind guard 23 has a tapered shape expanding toward the lower portion.

### (Third Modification)

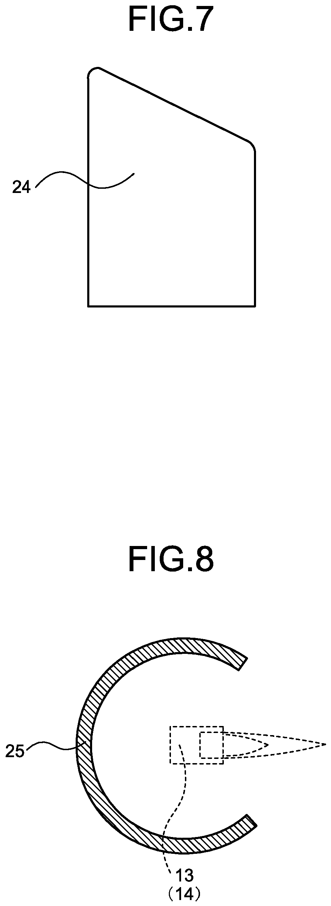

FIG. 7 is a side view illustrating a wind guard 24 according to a third modification of the present invention. As illustrated in FIG. 7, the lateral surface shape of the wind guard 24 in the third modification has a shape for which the corner of the upper portion in the lateral surface shape of the wind guard 20 in the above-described embodiment is rounded.

### (Fourth Modification)

FIG. 8 is a top view illustrating a wind guard 25 according to a fourth modification of the present invention. As illustrated in FIG. 8, the upper surface shape of the wind guard 25 in the fourth modification has a C-shape for which the emission side of the flames from the auxiliary burner 13 or 14 is open and has a shape covering, with respect to the auxiliary burner 13 or 14, the side opposite to the emission side, and the lateral sides as viewed from the emission side.

### (Fifth Modification)

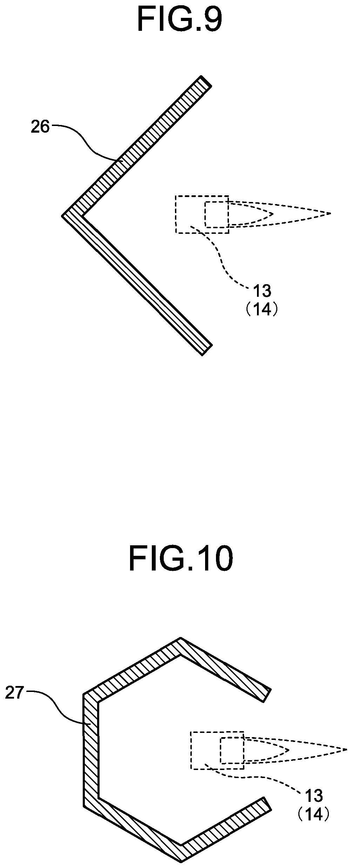

FIG. 9 is a top view of a wind guard 26 according to a fifth modification of the present invention. As illustrated in FIG. 9, the upper surface shape of the wind guard 26 in the fifth modification has an L-shape for which the emission side of the flames from the auxiliary burner 13 or 14 is open and has a shape covering, with respect to the auxiliary burner 13 or 14, the side opposite to the emission side, and the lateral sides as viewed from the emission side.

### (Sixth Modification)

FIG. 10 is a top view of a wind guard 27 according to a sixth modification of the present invention. As illustrated in FIG. 10, the upper surface shape of the wind guard 27 in the sixth modification is in a shape for which, in a shape of an even-numbered polygon, for example, in a hexagonal shape, one side on the emission side of the flames of the auxiliary burner 13 or 14 is open. As a result, the wind guard 27 has a shape covering, with respect to the auxiliary burner 13 or 14, the side opposite to the emission side, and the lateral sides as viewed from the emission side.

### (Seventh Modification)

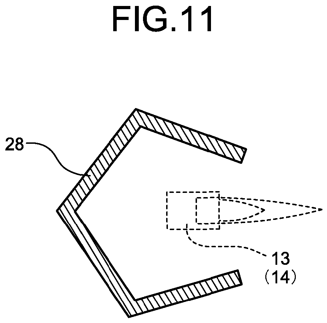

FIG. 11 is a top view of a wind guard 28 according to a seventh modification of the present invention. As illustrated in FIG. 11, the upper surface shape of the wind guard 28 in the seventh modification is in a shape for which, in a shape of an odd-numbered polygon, for example, in a pentagonal shape, one side on the emission side of the flames of the auxiliary burner 13 or 14 is open. As a result, the wind guard 28 has a shape covering, with respect to the auxiliary burner 13 or 14, the side opposite to the emission side, and the lateral sides as viewed from the emission side.

The lateral surface shape (FIG. 3) and the upper surface shape (FIG. 4) in the embodiment, the lateral surface shapes by the first to the third modifications (FIG. 5 to FIG. 7), and the upper surface shapes by the fourth to the seventh modifications (FIG. 8 to FIG. 11) in the foregoing can be selected and combined as appropriate. Specifically, the wind guard can be in various shapes, such as a wind guard having the lateral surface shape by the embodiment (see FIG. 3) and having the upper surface shape by the fourth modification (see FIG. 8), a wind guard having the lateral surface shape by the second modification (see FIG. 6) and having the upper surface shape by the seventh modification (see FIG. 11), and the like, for example.

The embodiment of the present invention in the foregoing enables the wind guards 20 and 21 serving as an airflow guiding unit to prevent the airflow 3 in the reaction chamber 11 from directly blowing against the flames of the auxiliary burner 13, and thus the flames are not greatly fanned by the airflow 3 are stabilized, the sintering of the end portions of the porous preform 2 can be performed sufficiently. Thus, in the vitrification process performed after manufacturing the porous preform 2, the occurrence of cracks in the porous preform 2 can be suppressed.

In the foregoing, the embodiment of the present invention has been explained concretely. However, the present invention is not limited to the above-described embodiment. For example, the numerical values presented in the above-described embodiment are mere examples, and different numerical values may be used as needed.

While, in the above-described embodiment, the example using SiCl₄ as the glass material has been illustrated, for the glass material, SiHCl₃, SiHCl₂, and the like may be used, for example, and for Ge raw material as a dopant, GeCl₄ may further be used. Moreover, a glass material such as siloxane may be used. Furthermore, as the flammable gas, in addition to H₂, a short-chain hydrocarbon such as CH₄, C₂H₆, C₃H₈, C₄H₁₀, and the like may be used, for example.

In the above-described embodiment, the glass-particulate synthesizing burner 12 has been made to reciprocate along the longitudinal direction of the target 16. However, the glass-particulate synthesizing burner 12 and the porous preform 2 only need to reciprocate relatively, and the porous preform 2 can be made to reciprocate with the glass-particulate synthesizing burner 12 standing still.

Furthermore, in the above-described third modification, an example of a shape for which the upper corner is rounded in the lateral surface shape of the wind guard 20 by the embodiment has been illustrated. However, it may be a shape for which the upper corner is rounded in the lateral surface shape of the wind guard 22 by the first modification or in the lateral surface shape of the wind guard 23 by the second modification.

### Industrial Applicability

As in the foregoing, the manufacturing apparatus and the manufacturing method for an optical fiber porous preform according to the present invention are suitable for application to the manufacture of an optical fiber porous preform.

### Reference Signs List

- 1: OVD APPARATUS

- 2: POROUS PREFORM
- 3: AIRFLOW
- 11: REACTION CHAMBER
- 11a: AIR INLET
- 11b: EXHAUST DUCT
- 12: GLASS-PARTICULATE SYNTHESIZING BURNER
- 13, 14: AUXILIARY BURNER
- 15: GAS SUPPLY UNIT
- 16: TARGET
- 17: DUMMY ROD
- 18: POROUS LAYER
- 20, 21, 22, 23, 24, 25, 26, 27, 28: WIND GUARD

## Claims

1. A manufacturing apparatus for an optical fiber porous preform comprising:
a reaction chamber (11) having an air inlet (11a) and an exhaust duct (11b);
a gas supply unit (15) that supplies a raw material gas and a flammable gas;
at least one main burner (12), provided in the reaction chamber (11), that ignites and burns the flammable gas and the raw material gas to synthesize glass particles and supplies the synthesized glass particles to a starting material (16) while being moved relative to the starting material (16) to deposit the particulates generated by reaction of the gases on an outer circumference of the starting material (16) to form a porous preform (2); and
at least one auxiliary burner (13) that heats an end portion of the porous preform, wherein a position of the auxiliary burner (13) with respect to the starting material (16) is immovable,
**characterized in that**
the manufacturing apparatus further comprises an airflow guiding unit (20) that prevents an air flow from the air inlet (11a) to the exhaust duct (11b) from directly blowing against the auxiliary burner (13), the airflow guiding unit (20) being provided in a vicinity of the auxiliary burner (13),
the airflow guiding unit (20) has a shape for which an emission side of flames that the auxiliary burner (13) emits is open and a shape covering, with respect to the auxiliary burner (13), a side opposite to the emission side, and lateral sides as viewed from the emission side,
an open portion of the airflow guiding unit is located on an exhaust duct (11b) side of an airflow generated in the reaction chamber (11).

2. The manufacturing apparatus for an optical fiber porous preform according to claim 1, wherein the auxiliary burner (13) is provided in a vicinity of an end portion along a longitudinal direction of the starting material (16).

3. A manufacturing method for an optical fiber porous preform, in which, in a reaction chamber (11) having an air inlet (11a) and an exhaust duct (11b), a porous preform (2) is formed by moving a main burner (12) relative to a starting material (16) while supplying gas containing a flammable gas and a raw material gas to the starting material (16) from the main burner (12), and by depositing particulates generated by reaction of the gases on an outer circumference of the starting material (16), the manufacturing method comprising:
heating an end portion of the porous preform (2) by an auxiliary burner (13), a position of the auxiliary burner (13) with respect to the starting material (16) being immovable, the method being **characterized in that**:
an airflow guiding unit (20) is provided in a vicinity of the auxiliary burner (13) emitting flames, wherein the airflow guiding unit (20) has a shape for which an emission side of flames that the auxiliary burner (13) emits is open and a shape covering, with respect to the auxiliary burner (13), a side opposite to the emission side, and lateral sides as viewed from the emission side,
an open portion of the airflow guiding unit (20) is located on an exhaust duct (11b) side of an airflow generated in the reaction chamber (11), and
the airflow guiding unit (20) avoids an airflow from the air inlet (11a) from going toward the flames from the side opposite to the emission side of the flames of the auxiliary burner (13), and lateral sides as viewed from the emission side.

## Patentansprüche

1. Herstellungsvorrichtung für einen porösen Vorformling für optische Fasern, umfassend:
eine Reaktionskammer (11) mit einem Lufteinlass (11a) und einem Abluftkanal (11b);
eine Gasversorgungseinheit (15), die ein Rohmaterialgas und ein brennbares Gas liefert;
mindestens einen Hauptbrenner (12), der in der Reaktionskammer (11) vorgesehen ist und das brennbare Gas und das Rohmaterialgas entzündet und verbrennt, um Glaspartikel zu synthetisieren, und die synthetisierten Glaspartikel einem Ausgangsmaterial (16) zuführt, während er relativ zum Ausgangsmaterial (16) bewegt wird, um die durch die Reaktion der Gase erzeugten Partikel auf einem Außenumfang des Ausgangsmaterials (16) abzulagern und so einen porösen Vorformling (2) zu bilden; und
mindestens einen Hilfsbrenner (13), der einen Endabschnitt des porösen Vorformlings erhitzt, wobei eine Position des Hilfsbrenners (13) in Bezug auf das Ausgangsmaterial (16) unbeweglich ist,
**dadurch gekennzeichnet, dass**
die Herstellungsvorrichtung ferner eine Luftstromführungseinheit (20) umfasst, die verhindert, dass ein Luftstrom vom Lufteinlass (11a) zum Abluftkanal (11b) direkt gegen den Hilfsbrenner (13) bläst, wobei die Luftstromführungseinheit (20) in der Nähe des Hilfsbrenners (13) vorgesehen ist,
die Luftstromführungseinheit (20) eine Form, für die eine Emissionsseite von Flammen, die der Hilfsbrenner (13) emittiert, offen ist, und eine Form, die in Bezug auf den Hilfsbrenner (13) eine Seite abdeckt, die der Emissionsseite gegenüberliegt, und von der Emissionsseite aus gesehen seitliche Seiten hat,
ein offener Abschnitt der Luftstromführungseinheit auf einer Seite des Abgaskanals (11b) eines in der Reaktionskammer (11) erzeugten Luftstroms angeordnet ist.

2. Herstellungsvorrichtung für einen porösen Vorformling für optische Fasern nach Anspruch 1, wobei der Hilfsbrenner (13) in der Nähe eines Endabschnitts entlang einer Längsrichtung des Ausgangsmaterials (16) vorgesehen ist.

3. Herstellungsverfahren für einen porösen Vorformling für optische Fasern, bei dem in einer Reaktionskammer (11) mit einem Lufteinlass (11a) und einem Abluftkanal (11b) ein poröser Vorformling (2) gebildet wird, indem ein Hauptbrenner (12) relativ zu einem Ausgangsmaterial (16) bewegt wird (16) bewegt wird, während dem Ausgangsmaterial (16) vom Hauptbrenner (12) aus ein Gas zugeführt wird, das ein brennbares Gas und ein Rohmaterialgas enthält, und durch Abscheiden von Partikeln, die durch Reaktion der Gase erzeugt werden, auf einem Außenumfang des Ausgangsmaterials (16), wobei das Herstellungsverfahren umfasst:
Erhitzen eines Endabschnitts des porösen Vorformlings (2) durch einen Hilfsbrenner (13), wobei eine Position des Hilfsbrenners (13) in Bezug auf das Ausgangsmaterial (16) unbeweglich ist, wobei das Verfahren **dadurch gekennzeichnet ist, dass**:
eine Luftstromführungseinheit (20) in der Nähe des Hilfsbrenners (13), der Flammen emittiert, vorgesehen ist, wobei die Luftstromführungseinheit (20) eine Form hat, für die eine Emissionsseite von Flammen, die der Hilfsbrenner (13) emittiert, offen ist, und eine Form, die in Bezug auf den Hilfsbrenner (13) eine Seite gegenüber der Emissionsseite und Seitenflächen, von der Emissionsseite aus gesehen, abdeckt,
ein offener Abschnitt der Luftstromführungseinheit (20) auf der Seite eines Abgaskanals (11b) eines in der Reaktionskammer (11) erzeugten Luftstroms angeordnet ist, und
die Luftstromführungseinheit (20) verhindert, dass ein Luftstrom vom Lufteinlass (11a) von der Seite, die der Emissionsseite der Flammen des Hilfsbrenners (13) gegenüberliegt, und von den Querseiten, von der Emissionsseite aus gesehen, zu den Flammen strömt.

## Revendications

1. Appareil de fabrication pour une préforme poreuse de fibre optique comprenant :
une chambre de réaction (11) présentant une entrée d'air (11a) et un conduit d'échappement (11b) ;
une unité d'alimentation en gaz (15) qui fournit un gaz de matière première et un gaz inflammable ;
au moins un brûleur principal (12), prévu dans la chambre de réaction (11), qui enflamme et brûle le gaz inflammable et le gaz de matière première pour synthétiser des particules de verre et fournit les particules de verre synthétisées à un matériau de départ (16) tout en étant déplacé par rapport au matériau de départ (16) pour déposer les particules générées par une réaction des gaz sur une circonférence extérieure du matériau de départ (16) afin de former une préforme poreuse (2) ; et
au moins un brûleur auxiliaire (13) qui chauffe une portion d'extrémité de la préforme poreuse, dans lequel une position du brûleur auxiliaire (13) par rapport au matériau de départ (16) est immobile,
**caractérisé en ce que**
l'appareil de fabrication comprend en outre une unité de guidage de flux d'air (20) qui empêche un flux d'air de l'entrée d'air (11a) au conduit d'échappement (11b) de souffler directement contre le brûleur auxiliaire (13), l'unité de guidage de flux d'air (20) étant prévue à proximité du brûleur auxiliaire (13),
l'unité de guidage de flux d'air (20) présente une forme pour laquelle un côté émission des flammes que le brûleur auxiliaire (13) émet est ouvert et une forme couvrant, par rapport au brûleur auxiliaire (13), un côté opposé au côté émission, et des côtés latéraux vus du côté émission,
une portion ouverte de l'unité de guidage de flux d'air est située sur un côté conduit d'échappement (11b) d'un flux d'air généré dans la chambre de réaction (11).

2. Appareil de fabrication pour une préforme poreuse de fibre optique selon la revendication 1, dans lequel le brûleur auxiliaire (13) est prévu à proximité d'une portion d'extrémité le long d'une direction longitudinale du matériau de départ (16).

3. Procédé de fabrication pour une préforme poreuse de fibre optique, dans lequel, dans une chambre de réaction (11) présentant une entrée d'air (11a) et un conduit d'échappement (11b), une préforme poreuse (2) est formée par déplacement d'un brûleur principal (12) par rapport à un matériau de départ (16) tout en fournissant un gaz contenant un gaz inflammable et un gaz de matière première au matériau de départ (16) à partir du brûleur principal (12), et par dépôt de particules générées par une réaction des gaz sur une circonférence extérieure du matériau de départ (16), le procédé de fabrication comprenant :
le chauffage d'une portion d'extrémité de la préforme poreuse (2) par un brûleur auxiliaire (13), une position du brûleur auxiliaire (13) par rapport au matériau de départ (16) étant immobile, le procédé étant **caractérisé en ce que** :
une unité de guidage de flux d'air (20) est prévue à proximité du brûleur auxiliaire (13) émettant des flammes, dans lequel l'unité de guidage du flux d'air (20) présente une forme pour laquelle un côté émission des flammes que le brûleur auxiliaire (13) émet est ouvert et une forme couvrant, par rapport au brûleur auxiliaire (13), un côté opposé au côté émission, et des côtés latéraux vus du côté émission,
une portion ouverte de l'unité de guidage de flux d'air (20) est située du côté d'un conduit d'échappement (11b) d'un flux d'air généré dans la chambre de réaction (11), et
l'unité de guidage de flux d'air (20) évite qu'un flux d'air provenant de l'entrée d'air (11a) aille vers les flammes à partir du côté opposé au côté émission des flammes du brûleur auxiliaire (13), et des côtés latéraux vus du côté émission.
